# EUROPÄISCHE PATENTSCHRIFT

(11) **EP 4 469 852 B1**
(45) Veröffentlichungstag und Bekanntmachung des Hinweises auf die Patenterteilung: **24.12.2025**
(21) Anmeldenummer: 22830836.7
(22) Anmeldetag: 07.12.2022
(51) Int. Cl.: B60K 35/23, B60K 35/60, G02B 27/01, B32B 27/40, B32B 27/36, B32B 27/30, B32B 27/20, B32B 27/08, B32B 7/12, B32B 5/14, B32B 3/18, B32B 3/02, B32B 1/00, B32B 17/10, B60J 1/02, B60K 35/00

(54) **PROJEKTIONSANORDNUNG MIT ZWEI ANZEIGEBEREICHEN AUF EINER VERBUNDSCHEIBE**
PROJECTION SYSTEM WITH TWO DISPLAY AREAS ON A COMPOSITE PANE
DISPOSITIF DE PROJECTION POURVU DE DEUX ZONES D'AFFICHAGE SUR UN VITRE COMPOSITE

(30) Priorität: 24.01.2022 EP 22152971
(43) Veröffentlichungstag der Anmeldung: 04.12.2024
(73) Patentinhaber: Saint-Gobain Sekurit France, 60150 Thourotte (FR)
(72) Erfinder: GIER, Stephan, 52134 Herzogenrath (DE); SCHULZ, Valentin, 52134 Herzogenrath (DE)
(74) Vertreter: Feist, Florian Arno
(86) Internationale Anmeldenummer: PCT/EP2022/084774
(87) Internationale Veröffentlichungsnummer: WO 2023/138830

(56) Entgegenhaltungen:
- WO-A1-2021/106690
- WO-A1-2021/213884
- DE-A1- 102009 020 824

## Beschreibung

Die Erfindung betrifft eine Projektionsanordnung, ein Verfahren zu ihrer Herstellung und ihre Verwendung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf den Durchsichtsbereich der Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

Es ist ebenso bekannt, die Windschutzscheibe mit einer Reflexionsschicht auszustatten, welche zwar die Durchsicht erlaubt, aber die Projektorstrahlung dennoch in einem signifikanten Maße reflektiert. Der Einfallswinkel der Projektorstrahlung auf die Windschutzscheibe beträgt typischerweise etwa 65°, was nahe dem Brewster-Winkel für einen Luft-Glas-Übergang liegt (56,5° für Kalk-Natron-Glas). Wird der Projektor mit s-polarisierter Strahlung betrieben, so wird diese an den externen Oberflächen der Windschutzscheibe reflektiert. Eine zusätzliche Reflexionsschicht kann in diesem Fall dazu verwendet werden, die Intensität des Anzeigebildes zu verstärken. Wird der Projektor mit p-polarisierter Strahlung betrieben, so wird diese an den Scheibenoberflächen nicht wesentlich reflektiert. In diesem Fall ist eine Reflexionsschicht zwingend erforderlich, um das HUD zu realisieren. Als Reflexionsschicht kann beispielsweise eine Beschichtung mit mindestens einer metallischen Schicht, insbesondere Silberschicht, verwendet werden. Die Windschutzscheibe besteht typischerweise aus einer Außenscheibe und einer Innenscheibe, die über eine thermoplastische Zwischenschicht miteinander verbunden sind. Die besagte Beschichtung kann beispielsweise auf der zur Zwischenschicht hingewandten Oberfläche der Außenscheibe oder der Innenscheibe aufgebracht werden oder auf einer PET-Trägerfolie, die in die Zwischenschicht eingelagert ist. HUDs mit p-polarisierter Strahlung mit Reflexionsschichten sind beispielsweise aus DE102014220189A1, WO2019046157A1 und US2017242247A1 bekannt. Es sind aber auch rein dielektrische Reflexionsfolien bekannt, die aus einer Mehrzahl von Einzelschichten mit alternierend hohem und niedrigem Brechungsindex ausgebildet sind, wobei die reflektierende Wirkung durch optische Interferenz erzeugt wird. Auch solche Folien können in die Zwischenschicht eingelagert werden. Eine Verbundscheibe mit einer solchen Funktionsfolie ist beispielsweise aus WO03099553A1 bekannt.

Windschutzscheiben weisen außer dem transparenten Durchsichtsbereich einen opaken Maskierungsbereich auf, durch den keine Durchsicht möglich ist. Der Maskierungsbereich ist typischerweise in einem umlaufenden Randbereich der Windschutzscheibe angeordnet und umgibt den Durchsichtsbereich. Der opake Maskierungsbereich dient in erster Linie dazu, den zur Verklebung der Windschutzscheibe mit der Fahrzeugkarosserie verwendeten Klebstoff vor UV-Strahlung zu schützen. Ist die Verbundscheibe mit elektrischen Funktionen ausgestattet (beispielsweise einer Heizfunktion), so können die hierfür nötigen elektrischen Anschlüsse zudem im Maskierungsbereich kaschiert werden. Der Maskierungsbereich wird typischerweise durch einen schwarzen Abdeckdruck auf der zur Zwischenschicht hingewandten Oberfläche der Außenscheibe ausgebildet.

Es ist möglich, auch im Maskierungsbereich eine Anzeige zu erzeugen im Grunde nach dem gleichen Prinzip wie ein HUD. Es wird also auch der Maskierungsbereich durch einen Projektor bestrahlt, dort reflektiert, wodurch eine Anzeige für den Fahrer erzeugt werden. So können beispielsweise Informationen, die bislang im Bereich des Armaturenbretts angezeigt wurden, wie die Uhrzeit, Fahrtgeschwindigkeit, Motordrehzahl oder Angaben eines Navigationssystems, oder auch das Bild einer rückwärts gerichteten Kamera, welches die klassischen Außenspiegel oder Rückspiegel ersetzt, auf praktische und ästhetisch ansprechende Weise direkt auf der Windschutzscheibe dargestellt werden, beispielsweise in dem Abschnitt des Maskierungsbereichs, der an die Unterkante der Windschutzscheibe grenzt. Eine Projektionsanordnung dieser Art ist beispielsweise aus DE102009020824A1 bekannt. Aus WO2021/106690A1 ist eine Projektionsanordnung bekannt, in der sowohl ein Maskierungsbereich als auch ein Durchsichtbereich der Windschutzscheibe durch eine Projektionseinheit bestrahlt werden.

Wird eine Reflexionsschicht für ein HUD verwendet, so muss ein Kompromiss hinsichtlich deren optischen Eigenschaften gefunden werden. Für die Intensität des Anzeigebildes ist es vorteilhaft, wenn der Reflexionsgrad im sichtbaren Spektralbereich möglichst hoch ist. Da die Reflexionsschicht aber auch von außen durch die Windschutzscheibe tretendes Licht reflektiert und dadurch die Lichttransmission des Durchsichtsbereichs herabsetzt, sind der Höhe des Reflexionsgrades Grenzen gesetzt. Wird eine solche Reflexionsschicht auch im Maskierungsbereich eingesetzt, wo die Lichttransmission keine Rolle spielt, ist die Intensität des Anzeigebildes nicht optimal.

Der vorliegenden Erfindung liegt die Aufgabe zugrunde, eine verbesserte Projektionsanordnung bereitzustellen mit einem Anzeigebereich im Durchsichtsbereich und einem Anzeigebereich im Maskierungsbereich. Die Anzeige im Maskierungsbereich soll eine verbesserte Intensität des Anzeigebildes aufweisen.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Die erfindungsgemäße Projektionsanordnung umfasst eine Verbundscheibe. Die Verbundscheibe umfasst eine Außenscheibe und eine Innenscheibe, die über eine thermoplastische Zwischenschicht miteinander verbunden sind. Die Verbundscheibe ist dafür vorgesehen, in einer Fensteröffnung (beispielsweise der Fensteröffnung eines Fahrzeugs) den Innenraum (insbesondere Fahrzeuginnenraum) gegenüber der äußeren Umgebung abzutrennen. Mit Innenscheibe wird im Sinne der Erfindung die dem Innenraum zugewandte Scheibe der Verbundscheibe bezeichnet. Mit Außenscheibe wird die der äußeren Umgebung zugewandte Scheibe bezeichnet. Die Verbundscheibe ist bevorzugt eine Fahrzeugscheibe, beispielsweise eine Fensterscheibe eines Kraftfahrzeugs, Schienenfahrzeugs, Schiffs oder Luftfahrzeugs. Die Verbundscheibe ist besonders bevorzugt die Windschutzscheibe eines Fahrzeugs, bevorzugt eines Kraftfahrzeugs, insbesondere eines Personen- oder Lastkraftwagens. Sie kann aber auch eine andere Fahrzeugscheibe sein, beispielweise die Heckscheibe oder Seitenscheibe, wenn an diesen Scheiben Anzeigen gewünscht sind. Ebenso kann sie grundsätzlich auch in Gebäuden verwendet werden, beispielsweise als Fensterscheibe, Glasfassade oder Glastür im Außen- oder Innenbereich, oder auch in Möbeln oder anderen Einrichtungsgegenständen.

Die Verbundscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Im Falle von Fahrzeug-Windschutzscheiben wird die Oberkante häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Die erfindungsgemäße Verbundscheibe weist einen opaken Maskierungsbereich und einen transparenten Durchsichtsbereich auf. Mit Maskierungsbereich wird im Sinne der Erfindung ein Bereich der Verbundscheibe bezeichnet, durch den eine Durchsicht nicht möglich ist. Die Lichttransmission des Maskierungsbereichs beträgt bevorzugt im Wesentlichen 0%. Mit Durchsichtsbereich wird im Sinne der Erfindung ein Bereich der Verbundscheibe bezeichnet, der eine Durchsicht durch die Glasscheibe ermöglicht und der daher eine gewisse Transparenz oder zumindest Transluzenz aufweist. Die Lichttransmission des Durchsichtsbereichs beträgt bevorzugt mindestens 10%, besonders bevorzugt mindestens 20%, ganz besonders bevorzugt mindestens 50 %. Die Lichttransmission beträgt ganz besonders bevorzugt mindestens 70%, insbesondere dann, wenn die Verbundscheibe als Windschutzscheibe eines Fahrzeugs eingesetzt wird, für die eine Gesamttransmission größer als 70% betragen muss (bestimmt durch das durch ECE-R 43, Anhang 3, § 9.1 festgelegte Verfahren zur Prüfung der Lichtdurchlässigkeit von Kraftfahrzeugscheiben).

In einer typischen Ausgestaltung umgibt der Maskierungsbereich den Durchsichtsbereich rahmenartig. Der Maskierungsbereich ist also umlaufend um den Durchsichtsbereich angeordnet. Typischerweise bildet der Maskierungsbereich dabei zumindest abschnittsweise den Randbereich der Verbundscheibe. Damit ist gemeint, dass der Maskierungsbereich zumindest an einen Abschnitt der Seitenkante der Verbundscheibe angrenzt. Häufig bildet der Maskierungsbereich insgesamt den umlaufenden Randbereich der Verbundscheibe, insbesondere im Falle von Windschutzscheiben, Dachscheiben und Heckscheiben von Fahrzeugen. Der Maskierungsbereich ist daher in einer bevorzugten Ausgestaltung in einem umlaufenden Randbereich der Verbundscheibe angeordnet und den umgibt Durchsichtsbereich.

Die erfindungsgemäße Projektionsanordnung umfasst neben der Verbundscheibe mindestens eine bildgebende Einheit. Durch die mindestens eine bildgebende Einheit wird im Durchsichtsbereich ein Head-Up-Display (HUD) erzeugt und im Maskierungsbereich ein weiterer Anzeigebereich, der im Sinne der Erfindung als Sekundäranzeigebereich bezeichnet wird.

Die bildgebende Einheit kann beispielsweise ein Projektor sein oder eine elektronische Anzeige ("Display"), beispielsweise ein LCD-, LED-, oder TFT-Display.

Wie bei HUDs üblich bestrahlt die bildgebende Einheit einen Bereich der Verbundscheibe (genauer gesagt ihres Durchsichtsbereichs), wo die Strahlung in Richtung des Betrachters (Fahrers) reflektiert wird, wodurch ein virtuelles Bild erzeugt wird, welches der Betrachter von ihm aus gesehen hinter der Verbundscheibe wahrnimmt. Der durch die bildgebende Einheit bestrahlbare Bereich des Durchsichtsbereich wird im Sinne der Erfindung als HUD-Bereich bezeichnet. Die Strahlrichtung die bildgebende Einheit kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die mindestens eine bildgebende Einheit bestrahlt außerdem einen Bereich des Maskierungsbereichs der Verbundscheibe. Auch diese Strahlung wird in Richtung des Betrachters (Fahrers) reflektiert, wodurch ein weiteres Anzeigebild erzeugt wird, welches der Betrachter im Maskierungsbereich wahrnimmt. Der durch die bildgebende Einheit bestrahlbare Bereich des Maskierungsbereichs wird im Sinne der Erfindung als Sekundäranzeigebereich bezeichnet.

Die mindestens eine bildgebende Einheit ist also auf den im Durchsichtsbereich angeordneten HUD-Bereich und auf den im Maskierungsbereich angeordneten Sekundäranzeigebereich gerichtet. Er bestrahlt diese mit Strahlung im sichtbaren Bereich des elektromagnetischen Spektrums zur Erzeugung zweier Anzeigebilder, nämlich eines HUD-Anzeigebildes im Durchsichtsbereich und eines Sekundäranzeigebildes im Maskierungsbereich. Die Strahlung liegt insbesondere im Spektralbereich von 450 nm bis 650 nm, beispielsweise mit den Wellenlängen 473 nm, 550 nm und 630 nm (RGB).

Es können zur Erzeugung der beiden Anzeigebilder zwei verschiedene bildgebende Einheiten verwendet werden, nämlich eine erste bildgebende Einheit ("bildgebende HUD-Einheit", beispielsweise "HUD-Projektor"), die auf den HUD-Bereich gerichtet ist und diesen bestrahlt, und eine zweite bildgebende Einheit ("bildgebende Sekundäreinheit", beispielsweise "Sekundärprojektor"), die auf den Sekundäranzeigebereich gerichtet ist und diesen bestrahlt. So können die Anzeigebilder unabhängig voneinander erzeugt werden. Die bildgebenden Einheiten senden bevorzugt gleichartige Strahlung aus, also Strahlung derselben Wellenlänge(n) und derselben Polarisation. In ihrer Strahlungsintensität können sie sich unterscheiden. Es ist jedoch grundsätzlich auch möglich, dass eine einzige bildgebende Einheit verwendet wird, der sowohl den HUD-Bereich als auch den Sekundäranzeigebereich bestrahlt.

Die Verbundscheibe ist im HUD-Bereich und im Sekundäranzeigebereich jeweils mit einer Reflexionsschicht ausgestattet. Die Reflexionsschichten sind geeignet, die Strahlung der mindestens einen bildgebenden Einheit zur Erzeugung des jeweiligen Anzeigebildes zu reflektieren. Erfindungsgemäß weist die Reflexionsschicht im Sekundäranzeigebereich einen höheren Reflexionsgrad gegenüber der Strahlung der die bildgebenden Einheit auf als die Reflexionsschicht im HUD-Bereich. Es wird also nicht eine einzelne, homogene Reflexionsschicht verwendet, die sowohl den HUD-Bereich als auch den Sekundäranzeigebereich abdeckt, sondern die Reflexionsschicht ist jeweils an die Erfordernisse im jeweiligen Anzeigebereich angepasst. Im HUD-Bereich wird eine Reflexionsschicht mit einem geringeren Reflexionsgrad verwendet. Da dadurch auch von außen durch die Verbundscheibe tretendes Licht in geringerem Maße reflektiert wird, wird eine hohe Lichttransmission im Durchsichtsbereich, der den HUD-Bereich enthält sichergestellt. Im Maskierungsbereich, der den Sekundäranzeigebereich enthält, wird dagegen eine Reflexionsschicht mit einem höheren Reflexionsgrad verwendet. Dadurch wird die Intensität des Sekundäranzeigebildes deutlich erhöht. Das Sekundäranzeigebild ist für den Betrachter besser wahrnehmbar beziehungsweise, falls für die Sekundäranzeige eine eigene bildgebende Einheit verwendet wird, kann dieser mit einer geringeren Strahlungsintensität betrieben werden. Das sind große Vorteile der vorliegenden Erfindung.

Die Differenz zwischen dem Reflexionsgrad der Reflexionsschicht im Sekundäranzeigebereich und dem Reflexionsgrad der Reflexionsschicht im HUD-Bereich gegenüber der Strahlung der bildgebenden Einheit beträgt bevorzugt mindestens 10%, beispielsweise von 30% bis 60%. Damit wird ein deutlich intensitätsstärkeres Sekundäranzeigebild erreicht.

Die Reflexionsschicht im HUD-Bereich weist bevorzugt einen Reflexionsgrad von 10% bis 50% gegenüber der Strahlung der auf den HUD-Bereich gerichteten bildgebenden Einheit auf, besonders bevorzugt von 15% bis 35%. In diesem Bereich ist der Reflexionsgrad einerseits ausreichend hoch, dass eine HUD-Anzeige mit ausreichender Intensität realisierbar ist. Andererseits wird die Lichttransmission des Durchsichtbereichs nicht in kritischem Maße herabgesetzt.

Zumindest die Reflexionsschicht im HUD-Bereich ist bevorzugt transparent, was im Sinne der Erfindung bedeutet, dass sie eine mittlere Transmission im sichtbaren Spektralbereich (380 nm bis 780 nm) von mindestens 10%, bevorzugt mindestens 50 %, besonders bevorzugt mindestens 70 %, ganz besonders bevorzugt mindestens 80 % aufweist und dadurch die Durchsicht durch die Scheibe nicht wesentlich einschränkt.

Die Reflexionsschicht im Sekundäranzeigebereich weist bevorzugt einen Reflexionsgrad von 20% bis 100% gegenüber der Strahlung der auf den Sekundäranzeigebereich gerichteten bildgebenden Einheit auf, besonders bevorzugt von 35% bis 70%. Das ist vorteilhaft für eine hohe Intensität und gute Qualität des Sekundäranzeigebildes.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad beziehen sich im Rahmen der vorliegenden Erfindung auf den Reflexionsgrad gemessen mit einem Einfallswinkel von 65° zur innenraumseitigen Flächennormalen, was etwa der Bestrahlung durch übliche bildgebende Einheiten entspricht. Die Angaben zum Reflexionsgrad beziehen sich auf eine Reflexionsmessung mit einer Lichtquelle, die im betrachteten Spektralbereich gleichmäßig abstrahlt mit einer normierten Strahlungsintensität von 100%.

Die Reflexionsschichten decken mindestens den jeweiligen Anzeigebereich (HUD-Bereich beziehungsweise Sekundäranzeigebereich) ab. Sie können sich aber auch über den jeweiligen Anzeigebereich hinaus erstrecken, also zusätzlich benachbarte Bereiche der Verbundscheibe abdecken. Das kann vorteilhaft sein, um die Reflexionsschichten nicht so exakt positionieren zu müssen oder um Darstellungsfehler im Randbereich des Anzeigebildes zu vermeiden, die infolge einer nicht perfekten Positionierung der Reflexionsschichten auftreten könnten. Insbesondere im Falle der Reflexionsschicht im HUD-Bereich ist es vorteilhaft, wenn diese den gesamten Durchsichtsbereich abdeckt. Die Kante der Reflexionsschicht sollte bevorzugt im Maskierungsbereich angeordnet sein, so dass der gesamte Durchsichtsbereich homogene optische Eigenschaften aufweist und die Kante der Reflexionsschicht nicht sichtbar ist.

Die Reflexionsschicht im HUD-Bereich und die Reflexionsschicht im Sekundäranzeigebereich sind bevorzugt in derselben Ebene der Verbundscheibe angeordnet. Das hat insbesondere herstellungstechnische Vorteile.

In einer vorteilhaften Ausgestaltung der Erfindung sind die Reflexionsschichten jeweils als Reflexionsfolie beziehungsweise aus einer Reflexionsfolie ausgebildet. Die Reflexionsfolien weisen bevorzugt jeweils mindestens eine Schicht auf Basis von Polyethylenterephthalat (PET) auf und sind in der Zwischenschicht eingelagert. Solche PET-basierten Folien sind als Funktionsfolien für Verbundscheiben gebräuchlich. Sie können mitunter zugekauft werden und sind einfach in die Zwischenschicht integrierbar. Da PET-basierte Folien keine adhäsiven Eigenschaften gegenüber den Scheiben aufweisen, sind sie typischerweise zwischen mindestens einer äußeren und mindestens einer inneren thermoplastischen Verbindungsschicht angeordnet. Die mindestens eine äußere Verbindungsschicht ist dabei zwischen der Außenscheibe und der Reflexionsfolie angeordnet, die mindestens eine innere Verbindungsschicht zwischen der Innenscheibe und der Reflexionsfolie. Die Zwischenschicht weist also einen mehrschichtigen Aufbau auf, wobei die Reflexionsfolie über mindestens eine äußere thermoplastische Verbindungsschicht mit der Außenscheibe und über mindestens eine innere thermoplastische Verbindungsschicht mit der Innenscheibe verbunden ist. Die Verbindungsschichten sind bevorzugt jeweils aus einer thermoplastischen Folie (Verbindungsfolie) ausgebildet oder aus mehreren Folienabschnitten zusammengesetzt. Die Verbindungsfolien sind bevorzugt auf Basis von Polyvinylbutyral (PVB), Ethylen-Vinylacetat (EVA) oder Polyurethan (PU) ausgebildet.

Die Reflexionsfolien weisen mindestens eine Schicht auf Basis von oder aus PET auf. Der Anteil an PET an der besagten Schicht beträgt bevorzugt mehr als 90 Gew.-%, besonders bevorzugt mehr als 95 Gew.-%. Bevorzugt besteht die besagte Schicht im Wesentlichen aus PET. Die Reflexionsfolien können im Sinne der vorliegenden Erfindung auch als PET-basiert oder PET-haltig bezeichnet werden. Die Funktionsfolien weisen bevorzugt eine Dicke von 20 µm bis 200 µm auf, besonders bevorzugt von 25 µm bis 75 µm.

In einer Ausgestaltung umfassen die Reflexionsfolien eine Trägerfolie auf Basis von oder aus PET sowie eine darauf aufgebrachte elektrisch leitfähige Beschichtung. Die elektrisch leitfähige Beschichtung umfasst mindestens eine Schicht auf Basis eines Metalls, insbesondere Silber. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Paladium, Gold, Kupfer oder Aluminium. Die Dicke der Silberschicht beträgt üblicherweise von 5 nm bis 20 nm. Eine solche Beschichtung weist (teil-)reflektierende Eigenschaften im sichtbaren Bereich auf, so dass die Reflexionsfolie als Reflexionsfläche für das Anzeigesystem dienen kann. Die Beschichtung ist bevorzugt transparent ausgebildet, zumindest im Falle der Reflexionsfolie für den HUD-Bereich. Die Lichttransmission des Durchsichtsbereichs wird dann durch die leitfähige Beschichtung nicht in kritischem Maße herabgesetzt. Für transparente Beschichtungen werden typischerweise nur dünne metallische Schichten eingesetzt (beispielsweise mit einer Dicke bis zu 20 µm) sowie dielektrische Schichten, welche unter anderem der Entspiegelung der metallischen Schichten dienen. Im Falle der Reflexionsfolie für den Sekundäranzeigebereich muss die Beschichtung nicht transparent sein. In diesem Fall kann grundsätzlich auch eine dickere Silberschicht nach Art eines Spiegels verwendet werden, so dass der Reflexionsgrad gegenüber der Strahlung der bildgebenden Einheit im Wesentlichen 100% beträgt. Metallhaltige Beschichtungen weisen typischerweise auch IR-reflektierende Eigenschaften auf. Sie können daher als Sonnenschutzbeschichtungen eingesetzt werden, um den Durchtritt von infraroten Anteilen der Sonneneinstrahlung durch die Verbundscheibe zu verringern. So kann die Erwärmung des Innenraums hinter der Verbundscheibe reduziert werden und somit der thermische Komfort verbessert werden.

Die elektrisch leitfähige Beschichtung ist bevorzugt ein Dünnschichtstapel, also eine Schichtenfolge dünner Einzelschichten. Die gewünschten Reflexionscharakteristika, insbesondere der Reflexionsgrad gegenüber der Strahlung der bildgebenden Einheit und die Lichttransmission, werden insbesondere durch die Wahl der Materialien und Dicken der Einzelschichten erreicht. Die leitfähige Beschichtung kann so geeignet eingestellt werden, was auf dem technischen Gebiet üblich und dem Fachmann hinlänglich bekannt ist. Die besagte mindestens eine elektrisch leitfähige Schicht sorgt primär für die reflektierende Wirkung. Durch Verwendung mehrerer elektrisch leitfähiger Schichten kann der Reflexionsgrad weiter gesteigert werden, ohne die Lichttransmission allzu stark herabzusetzen.

Oberhalb und unterhalb der elektrisch leitfähigen Schicht sind typischerweise dielektrische Schichten oder Schichtenfolgen angeordnet. Umfasst die leitfähige Beschichtung mehrere leitfähige Schichten, so ist bevorzugt jede leitfähige Schicht jeweils zwischen zwei typischerweise dielektrischen Schichten oder Schichtenfolgen angeordnet, so dass zwischen benachbarten leifähigen Schichten jeweils eine dielektrische Schicht oder Schichtenfolgen angeordnet ist. Die Beschichtung ist also ein Dünnschicht-Stapel mit n elektrisch leitfähigen Schichten und (*n*+*1*) dielektrischen Schichten oder Schichtenfolgen, wobei n eine natürliche Zahl ist und wobei auf eine untere dielektrische Schicht oder Schichtenfolge jeweils im Wechsel eine leitfähige Schicht und eine dielektrische Schicht oder Schichtenfolge folgt. Solche Beschichtungen sind als Sonnenschutzbeschichtungen und heizbare Beschichtungen bekannt.

Gebräuchliche dielektrische Schichten eines solchen Dünnschichtstapels sind beispielsweise:
- Entspiegelungsschichten, welche die Reflexion von sichtbarem Licht senken und somit die Transparenz der beschichteten Scheibe erhöhen, beispielsweise auf Basis von Siliziumnitrid, Silizium-Metall-Mischnitriden wie Siliziumzirkoniumnitrid, Titanoxid, Aluminiumnitrid oder Zinnoxid, mit Schichtdicken von beispielsweise 10 nm bis 100 nm;
- Anpassungsschichten, welche die Kristallinität der elektrisch leitfähigen Schicht verbessern, beispielsweise auf Basis von Zinkoxid (ZnO), mit Schichtdicken von beispielsweise 3 nm bis 20 nm;
- Glättungsschichten, welche die Oberflächenstruktur für die darüberliegenden Schichten verbessern, beispielsweise auf Basis eines nichtkristallinen Oxids von Zinn, Silizium, Titan, Zirkonium, Hafnium, Zink, Gallium und/oder Indium, insbesondere auf Basis von Zinn-Zink-Mischoxid (ZnSnO), mit Schichtdicken von beispielsweise 3 nm bis 20 nm.

Die Reflexionsbeschichtung kann neben den elektrisch leitfähigen Schichten und dielektrischen Schichten auch Blockerschichten umfassen, welche die leitfähigen Schichten vor Degeneration schützen. Blockerschichten sind typischerweise sehr dünne metallhaltige Schichten auf Basis von Niob, Titan, Nickel, Chrom und/oder Legierungen mit Schichtdicken von beispielsweise 0,1 nm bis 2 nm.

In einer bevorzugten Ausgestaltung sind die Reflexionsfolien rein dielektrische polymere Folien, welche alternierende Einzelschichten mit unterschiedlichem Brechungsindex enthalten. Die Folien weisen keine metallhaltigen Beschichtungen auf. Sie sind rein dielektrische Schichtenfolgen aus polymeren Schichten mit einem höheren und polymeren Schichten mit einem niedrigeren Brechungsindex, welche alternierend angeordnet sind. Zumindest eine der beiden Schichtarten ist auf Basis von PET ausgebildet. Die andere Schichtart kann ebenfalls auf Basis von PET ausgebildet sein, wobei die unterschiedlichen Brechungsindizes durch geeignete Zusätze erreicht werden, auf Basis eines PET-Copolymers oder auf Basis eines anderen Polymers, beispielsweise PMMA. Durch den Wechsel von Schichten mit unterschiedlichem Brechungsindex werden optische Interferenzeffekte erzielt, die für den jeweiligen Anwendungsfall geeignet eingestellt werden können (insbesondere durch Wahl der Schichtdicken und der Brechungsindizes), um reflektierende Eigenschaften in einem gewünschte Spektralbereich zu realisieren. So können reflektierende Eigenschaften im sichtbaren Spektralbereich erreicht werden, um die Funktionsfolie als Reflexionsfläche für ein Anzeigesystem zu verwenden. Die Reflexionseigenschaften der Folie können auf die Reflexion der Strahlung der bildgebenden Einheit optimiert werden, ein gewünschter Reflexionsgrad sowie eine gewünschte Lichttransmission gezielt eingestellt werden. Es können zusätzlich IR-reflektierende Eigenschaften erreicht werden, um den Durchtritt infraroter Anteile der Sonnenstrahlung zu verringern.

Grundsätzlich ist auch eine Kombination der beiden vorstehend beschriebenen Ausgestaltungen denkbar, wobei eine der Reflexionsfolien als PET-Trägerfolie mit elektrisch leitfähiger Beschichtung und die andere als rein dielektrische Folie ausgestaltet ist. So kann beispielsweise eine transparente, rein dielektrische Reflexionsfolie für den HUD-Bereich verwendet werden und eine Trägerfolie mit einer Silberbeschichtung nach Art eines Spiegels für den Sekundäranzeigebereich. Oder es kann beispielsweise eine rein dielektrische Reflexionsfolie für den Sekundäranzeigebereich verwendet werden und eine Trägerfolie mit einer transparenten leitfähigen Beschichtung für den Durchsichtsbereich, um dort den Durchtritt von IR-Strahlung zu verringern.

Die Reflexionsfolie für den HUD-Bereich und die Reflexionsfolie für den Sekundäranzeigebereich sind in einer bevorzugten Ausgestaltung derart angeordnet, ihre Seitenkanten direkt aneinandergrenzen entlang einer Linie, die im Sinne der Erfindung als Kontaktlinie bezeichnet wird. Dies hat den Vorteil, dass die Reflexionsfolien einfacher positionierbar sind, weil sie nicht unabhängig voneinander exakt positioniert werden müssen. Insbesondere ist es möglich, die beiden Reflexionsfolien vor der Herstellung der Verbundscheibe bereits entlang der Kontaktlinie zu einer zusammenhängenden Folie zu verbinden, so dass nur diese einzelne zusammenhängende Folie im Schichtstapel positioniert werden muss. Die Kontaktlinie ist bevorzugt im Maskierungsbereich angeordnet, da sie im Durchsichtsbereich störend auffallen könnte. Der Abstand der Kontaktlinie von der dem Durchsichtsbereich zugewandten Kante des Maskierungsbereichs beträgt bevorzugt mindestens 1 mm, besonders bevorzugt von 3 mm bis 15 mm. In diesem Bereich ist die Kontaktlinie einerseits weit genug vom Durchsichtsbereich beabstandet, so dass sie gut durch den Maskierungsbereich kaschiert und auch unter Berücksichtigung üblicher Fertigungstoleranzen nicht im Durchsichtsbereich zu sehen ist, und weist andererseits auch keinen zu großen Abstand zum Durchsichtsbereich auf, so dass die Reflexionsfolie für den HUD-Bereich einen zu großen Bereich des Maskierungsbereichs beanspruchen würde, welche dann nicht mehr für den Sekundäranzeigebereich zur Verfügung stünde.

Die Reflexionsschicht muss aber nicht zwingend als Reflexionsfolie ausgebildet sein. So können auch elektrisch leitfähige Beschichtungen auf einer der Oberflächen der Scheiben verwendet werden. Die Beschichtungen weisen bevorzugt mit mindestens eine Schicht auf Basis eines Metalls auf, insbesondere Silber. Sie können als transparente, teilreflektierende Beschichtungen ausgebildet sein, wobei nur dünne metallische Schichten eingesetzt (beispielsweise mit einer Dicke bis zu 20 µm) sowie dielektrische Schichten, welche unter anderem der Entspiegelung der metallischen Schichten dienen. Für die Ausgestaltung der Beschichtung gelten grundsätzlich die vorstehenden Ausführungen zur leitfähigen Beschichtung auf einer PET-basierten Trägerfolie. Für den Sekundäranzeigebereich kann grundsätzlich aber auch eine dickere Silberschicht nach Art eines Spiegels verwendet werden. Die Beschichtungen sind bevorzugt auf einer der Zwischenschicht zugewandten Oberflächen der Außenscheibe oder der Innenscheibe angeordnet, also auf der innenraumseitigen Oberfläche der Außenscheibe oder der außenseitigen Oberfläche der Innenscheibe. Die Beschichtung ist insbesondere auf der außenseitigen Oberfläche der Innenscheibe angeordnet, weil es dann einfacher ist, den Maskierungsbereich durch ein opakes Element zu realisieren, was ja weiter von der Innenscheibe beabstandet sein muss als die Reflexionsschicht, da letztere sonst nicht durch die bildgebende Einheit bestrahlbar wäre. Die thermoplastische Zwischenschicht kann in diesem Fall aus einer einzelnen Verbindungsfolie ausgebildet werden oder aus mehreren Verbindungsfolien.

Der Maskierungsbereich kann durch einen opaken, insbesondere schwarzen Aufdruck (Abdeckdruck) auf der innenraumseitigen Oberfläche der Außenscheibe ausgebildet sein. Der Abdeckdruck besteht typischerweise aus einer im Siebdruckverfahren aufgebrachten und anschließenden eingebrannten Emaille, welche Glasfritten und Farbmittel (insbesondere Pigmente) enthält. Solche Abdeckdrucke sind insbesondere für Fahrzeugscheiben allgemein gebräuchlich. Das Pigment ist typischerweise ein Schwarzpigment, beispielsweise Pigmentruß (Carbon Black), Anilinschwarz, Beinschwarz, Eisenoxidschwarz, Spinellschwarz und/oder Graphit. Der Abdeckdruck weist bevorzugt eine Dicke von 5 µm bis 50 µm auf, besonders bevorzugt von 8 µm bis 25 µm.

In einer Weiterbildung der Erfindung ist der Maskierungsbereich zumindest im Sekundäranzeigebereich durch eine opake polymere Folie ausgebildet, welche Teil der Zwischenschicht ist und welche zwischen den Reflexionsschichten und der Außenscheibe angeordnet ist.

Unter einer opaken Folie wird im Sinne der Erfindung eine Folie mit einer Lichttransmission im sichtbaren Spektralbereich von weniger als 5%, insbesondere von 0% verstanden. Unter einer transparenten Folie wird eine Folie mit einer Lichttransmission von mindestens 10%, bevorzugt mindestens 50%, besonders bevorzugt mindestens 70%, ganz besonders bevorzugt mindestens 80% verstanden.

Diese Ausgestaltung ist besonders dann vorteilhaft, wenn die Reflexionsschicht als PET-basierte Reflexionsfolie ausgebildet ist. Die äußere thermoplastische Verbindungsschicht (oder mindestens einer der äußeren thermoplastischen Verbindungschichten, falls mehrere vorhanden sind) weist dabei einen transparenten Bereich und einen opaken Bereich auf. Sie ist dazu aus zwei unterschiedlichen Verbindungsfolien zusammengesetzt, nämlich einer transparenten Verbindungsfolie und einer opaken Verbindungsfolie. Die opake Verbindungsfolie enthält Farbmittel (Pigmente oder Farbstoffe) in einer für die Opazität ausreichenden Konzentration. Die beiden Folien werden insbesondere bündig an ihren Seitenkanten zusammengesetzt, so dass in einer Ebene angeordnet sind und gemeinsam eine Schicht ausbilden. Die transparente Verbindungsfolie bildet dabei den transparenten Bereich der besagten äußeren Verbindungsschicht aus und ist (zumindest teilweise) im Durchsichtsbereich der Verbundscheibe angeordnet. Die opake Verbindungsfolie bildet den opaken Bereich der äußeren Verbindungsschicht aus und auch zumindest einen Teil des Maskierungsbereichs der Verbundscheibe, welcher den Sekundäranzeigebereich enthält.

Damit ist gemeint, dass die opake Verbindungsfolie der besagten äußeren Verbindungsschicht dasjenige opake Element ist, dass dazu führt, dass ein Bereich der Verbundscheibe (nämlich der Maskierungsbereich oder zumindest ein Teil des Maskierungsbereichs, der den Sekundäranzeigebereich enthält) seinerseits opak ist und keine Durchsicht erlaubt. Die opake Verbindungsfolie ist also im Maskierungsbereich der Verbundscheibe angeordnet und verhindert die Durchsicht durch diesen (oder zumindest durch einen Teil von diesem), so dass er zum opaken Maskierungsbereich wird. In anderen Worten: die besagte äußere Verbindungsschicht umfasst einen transparenten Durchsichtsbereich, der aus mindestens einer transparenten Verbindungsfolie ausgebildet ist, und einen opaken Maskierungsbereich, der aus mindestens einer opaken Verbindungsfolie ausgebildet ist. Durch den opaken Maskierungsbereich der äußeren Verbindungsschicht wird der Maskierungsbereich der Verbundscheibe zumindest teilweise ausgebildet.

Es ist möglich, dass die opake Verbindungsfolie der besagten äußeren Verbindungsschicht den gesamten Maskierungsbereich der Verbundscheibe ausbildet. Es ist aber auch möglich, dass nur ein Teil des Maskierungsbereichs durch die opake Verbindungsfolie ausgebildet wird, während der übrige Teil des Maskierungsbereichs durch ein anderes opakes Element, insbesondere einen Abdeckdruck (bevorzugt auf der innenraumseitigen Oberfläche der Außenscheibe) ausgebildet wird. Derjenige Teil des Maskierungsbereichs, der den Sekundäranzeigebereich enthält, ist dabei durch die opake Verbindungsfolie ausgebildet und weist bevorzugt keinen Abdeckdruck auf. Andere Teile des Maskierungsbereichs sind durch einen opaken Abdeckdruck ausgebildet. Dort ist die besagte Verbindungsfolie bevorzugt transparent.

Ein Problem bei der Verwendung von PET-basierten Folien ergibt sich daraus, dass sie ein anderes Schrumpfverhalten aufweisen als typische Verbindungsfolien, beispielsweise PVB-Folien. Dies kann zum sogenannten Orangenhauteffekt (*orange skin effect*) führen - Verwerfungen, welche aus einer Deformation an der Grenzfläche zwischen der Reflexionsfolie und den angrenzenden Verbindungsfolien resultieren. Der Orangenhauteffekt ruft optische Verzerrungen hervor, welche insbesondere in Reflexion sichtbar sind und daher die Qualität des durch Reflexion hervorgerufenen Sekundäranzeigebildes herabsetzen. Die Erfinder haben festgestellt, dass der durch die Reflexionsfolie hervorgerufene Orangenhauteffekt vor dem Hintergrund der opaken Verbindungsfolie weniger auffällig ist als vor dem Hintergrund eines opaken Abdeckdrucks. Das Erscheinungsbild der Verbundscheibe wird dadurch signifikant verbessert, weil der Orangenhauteffekt einem Betrachter weniger störend auffällt. Die Erfinder vermuten, dass die Rauigkeit der üblichen Abdeckdrucke die Auffälligkeit des Orangenhauteffekts verstärkt, was durch deren Ersatz durch eine opake Verbindungsfolie vermieden werden kann.

Die äußere Verbindungsschicht mit der opaken Verbindungsfolie kann die einzige äußere Verbindungsschicht sein. Es können aber auch weitere äußere Verbindungsfolien vorhanden sein, welche bevorzugt transparent sind. Es kann eine einzelne innere Verbindungsschicht vorliegen oder auch mehrere innere Verbindungsschichten, welche transparent ist/sind. Besonders sind die folgenden Schichtenfolgen hervorzuheben, welche in der angegebenen Reihenfolge die Verbundscheibe bilden:
- Außenscheibe - äußere Verbindungsschicht mit opakem Bereich - Reflexionsfolien - transparente innere Verbindungsschicht - Innenscheibe;
   die Dicke der ersten äußeren Verbindungsschicht beträgt bevorzugt von 0,3 mm bis 2 mm, besonders bevorzugt von 0,6 mm bis 1,6 mm, besonders bevorzugt von 0,7 mm bis 1,0 mm. Die Dicke der inneren Verbindungsschicht beträgt bevorzugt von 0,005 mm bis 0,55 mm, besonders bevorzugt von 0,03 mm bis 0,5 mm, ganz besonders bevorzugt von 0,035 mm bis 0,4 mm;
- Außenscheibe - äußere Verbindungsschicht mit opakem Bereich - transparente weitere äußere Verbindungsschicht - Reflexionsfolien - transparente innere Verbindungsschicht - Innenscheibe;
   diese Ausgestaltung hat insbesondere herstellungsbedingte Vorteile: die weitere äußere Verbindungsschicht, die Reflexionsfolien und die innere Verbindungsschicht, welche jeweils einstückig ausgebildet sind, können zu einer einfach zu handhabenden Mehrschichtfolie verbunden werden, welche bei der Herstellung der Verbundscheibe zwischen die Scheiben eingelegt wird, wodurch die drei Schichten simultan positioniert werden; die Dicke der äußeren Verbindungsschicht mit opakem Bereich, der weiteren äußeren Verbindungsschicht und der inneren Verbindungsschicht betragen jeweils bevorzugt von 0,005 mm bis 0,55 mm, besonders bevorzugt von 0,03 mm bis 0,5 mm, ganz besonders bevorzugt von 0,035 mm bis 0,4 mm.

Die genannten Schichtenfolgen enthalten die genannten Schichten. Es können weitere Verbindungsschichten, insbesondere transparente Verbindungsschichten vorhanden sein, zwischen den Reflexionsfolien und der Außenscheibe und/oder zwischen den Reflexionsfolien und der Innenscheibe. Besonders bevorzugt bestehen die genannten Schichtenfolgen nur aus den genannten Schichten.

Die Dicke der äußeren thermoplastischen Verbindungsschicht (beziehungsweise die Summe der Dicken sämtlicher äußerer thermoplastischer Verbindungsschichten, falls mehrere vorhanden sind) ist in einer vorteilhaften Ausgestaltung größer als die Dicke der inneren thermoplastischen Verbindungsschicht (beziehungsweise die Summe der Dicken sämtlicher innerer thermoplastischer Verbindungsschichten, falls mehrere vorhanden sind). Dies hat den Vorteil, dass die Reflexionsoptik der Verbundscheibe weiter verbessert wird und damit ihr Erscheinungsbild. Durch die dünne innere thermoplastische Schicht wird die PET-basierte Funktionsfolie sehr fest an die Innenscheibe gebunden, wodurch sie weniger stark schrumpfen kann, was zu einem weniger stark ausgeprägten Orangenhauteffekt führt. Da die Verbundscheibe von der bildgebenden Einheit über die Innenscheibe bestrahlt wird, ist es zudem für die Qualität des Anzeigebildes vorteilhaft, wenn die innere thermoplastische Schicht dünn ist. Die innere thermoplastische Verbindungsschicht oder Verbindungsschichtenfolge weist bevorzugt eine Dicke von 0,005 mm bis 0,55 mm auf, besonders bevorzugt von 0,03 mm bis 0,5 mm, ganz besonders bevorzugt von 0,035 mm bis 0,4 mm. Die äußere thermoplastische Verbindungsschicht oder Verbindungsschichtenfolge weist bevorzugt eine Dicke von 0,3 mm bis 2 mm auf, besonders bevorzugt von 0,6 mm bis 1,6 mm, ganz besonders bevorzugt von 0,7 mm bis 1,0 mm. Durch die dickere äußere thermoplastische Schicht oder Schichtenfolge wird die Stabilität der Verbundscheibe und die Abschirmung von störenden Geräuschen verbessert.

Ist der Maskierungsbereich in einem umlaufenden Randbereich der Verbundscheibe angeordnet, so grenzt ein Bereich des Maskierungsbereichs an die Unterkante der Verbundscheibe an, ein weiterer Bereich an die Oberkante der Verbundscheibe und zwei weitere Bereiche an jeweils eine Seitenkante. In einer vorteilhaften Ausgestaltung ist der Sekundäranzeigebereich im an die Unterkante angrenzenden Bereich des Maskierungsbereichs angeordnet. Der Sekundäranzeigebereich ist also zwischen dem Durchsichtsbereich und der Unterkante der Verbundscheibe angeordnet. Im Sekundäranzeigebereich können Statusinformationen angezeigt werden, die bislang typischerweise im Bereich des Armaturenbretts angezeigt wurden, wie die Uhrzeit, Fahrtgeschwindigkeit, Motordrehzahl, Kühlwassertemperatur, Innen- oder Außentemperatur, Informationen des Entertainment-Systems (wie der derzeit verwendete Radiosender) oder Angaben eines Navigationssystems. Ebenso kann das Bild einer oder mehrere rückwärts gerichteter Kameras dargestellt werden, um die klassischen Außenspiegel oder Rückspiegel zu ergänzen oder zu ersetzen. Die Darstellung dieser Informationen im Sekundäranzeigebereich hat den Vorteil, dass der Fahrer seinen Blick nicht so weit vom eigentlichen Blickfeld wenden muss wie bei den herkömmlichen Anzeigen. Außerdem ist die Darstellung ästhetisch ansprechend.

Die mindestens eine bildgebende Einheit bestrahlt die Reflexionsschichten über die Innenscheibe mit elektromagnetischer Strahlung im sichtbaren Spektralbereich zur Erzeugung eines Anzeigebildes, welches ein im Innenraum befindlicher Benutzer wahrnehmen kann. Die mindestens eine bildgebende Einheit ist also innenraumseitig der Verbundscheibe angeordnet und bestrahlt die Verbundscheibe über die innenraumseitige Oberfläche der Innenscheibe. Die Strahlung der bildgebenden Einheit wird an den Reflexionsschichten (teil-)reflektiert. Bevorzugt weist die Projektionsanordnung zwei bildgebende Einheiten auf, wobei die erste bildgebende Einheit den HUD-Bereich und die zweite bildgebende Einheit den Sekundäranzeigebereich bestrahlt.

In einer besonders vorteilhaften Ausgestaltung sendet die mindestens eine bildgebende Einheit (beziehungsweise beide bildgebenden Einheiten, wenn zwei bildgebende Einheiten verwendet werden) p-polarisierte Strahlung aus. Die Strahlung der mindestens einen bildgebenden Einheit weist also einen p-polarisierten Anteil auf. Der p-polarisierte Strahlungsanteil beträgt bevorzugt mehr als 50%, besonders bevorzugt mehr als 70%, ganz besonders bevorzugt mehr als 90% der Strahlung der bildgebenden Einheit. In einer besonders vorteilhaften Ausgestaltung ist die Strahlung der bildgebenden Einheit im Wesentlichen rein p-polarisiert ist - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Verbundscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des bestrahlten Bereichs aufgespannt. Die Polarisation, also insbesondere der Anteil an p- und s-polarisierter Strahlung, wird an einem Punkt des HUD-Bereichs bestimmt, bevorzugt im geometrischen Zentrum des HUD-Bereichs. Ist die Verbundscheibe gekrümmt, was insbesondere bei Fahrzeugscheiben üblicherweise der Fall ist, so hat dies Auswirkungen auf die Einfallsebene der Strahlung der bildgebenden Einheit. Daher können in den übrigen Bereichen leicht davon abweichende Polarisationsanteile auftreten, was aus physikalischen Gründen unvermeidlich ist.

Die Strahlung der bildgebenden Einheit trifft bevorzugt mit einem Einfallswinkel von 45° bis 70°, insbesondere von 60° bis 70° auf die Verbundscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Verbundscheibe reflektiert. Dadurch stellt die Funktionsfolie die einzige signifikante Reflexionsfläche für die Strahlung der bildgebenden Einheit dar. Würde die Strahlung auch an den externen Oberflächen der Verbundscheibe (Luft-Glas-Übergang) signifikant reflektiert werden, so würden Mehrfachbilder entstehen, was für den Benutzer zumindest störend, wenn nicht gar gänzlich inakzeptabel wäre. Der Einfallswinkel ist der Winkel zwischen dem Einfallsvektor der Strahlung der bildgebenden Einheit und der innenraumseitigen Flächennormale (also die Flächennormale auf die innenraumseitige externe Oberfläche der Verbundscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 56,5° (bei einem Brechungsindex von Kalk-Natron-Glas bei 550 nm von 1,51). Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Da die Reflexion der p-polarisierten Strahlung der bildgebenden Einheit im Wesentlichen an den Reflexionsschichten erfolgt und nicht an den externen Scheibenoberflächen, ist es nicht nötig, die externen Scheibenoberflächen in einem Winkel (Keilwinkel) zueinander anzuordnen, um Geisterbilder zu vermeiden. Solche Keilwinkel sind bei Projektionsanordnungen mit s-polarisierter Strahlung üblich, welche an beiden externen Scheibenoberflächen reflektiert wird, was bei einer parallelen Anordnung derselben zu zwei zueinander versetzten Anzeigebildern führen würde (Hauptbild und Geisterbild). Die externen Oberflächen der Windschutzscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Windschutzscheibe, ebenso wie die Innenscheibe und die Außenscheibe. Eine keilartige Zwischenschicht würde dagegen im vertikalen Verlauf zwischen Unterkante und Oberkante der Windschutzscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Windschutzscheibe günstiger gestaltet.

Die thermoplastische Zwischenschicht ist, mit Ausnahme der etwaigen (PET-basierten) Reflexionsfolien, bevorzugt auf Basis von Polyvinylbutyral (PVB), Ethylen-Vinylacetat (EVA) oder Polyurethan (PU) ausgebildet oder aus Gemischen oder Copolymeren oder Derivaten davon, besonders bevorzugt auf Basis von PVB. Die Zwischenschicht ist typischerweise aus mindestens einer thermoplastischen Folie (Verbindungsfolie) ausgebildet, insbesondere auf Basis von PVB, EVA oder PU. Damit ist gemeint, dass die Folie größtenteils aus dem besagten Polymer besteht (Anteil größer als 50 Gew.-%). Die Folie kann außer dem Polymer weitere Zusätze enthalten, insbesondere Weichmacher. Sind die Reflexionsschichten als Reflexionsfolien ausgebildet, so umfasst die Zwischenschicht neben diesen Reflexionsfolien mindestens zwei Verbindungsschichten (innere und äußere Verbindungsschicht), wobei jeder der Verbindungsschichten typischerweise aus mindestens einer Verbindungsfolie ausgebildet ist, insbesondere auf Basis von PVB, EVA oder PU. Die Dicke jeder Verbindungsfolie beträgt bevorzugt von 0,2 mm bis 1 mm. Beispielsweise können PVB-Folien mit den Standarddicken von 0,38 mm oder 0,76 mm verwendet werden. Statt Folien können auch polymere Beschichtungen verwendet werden, insbesondere wenn die betreffende thermoplastische Schicht sehr dünn ausgebildet werden soll, beispielsweise mit einer Dicke von 0,005 mm bis 0,1 mm oder von 0,02 mm bis 0,07 mm.

Die Außenscheibe und die Innenscheibe sind bevorzugt Glasscheiben, besonders bevorzugt gefertigt aus Kalk-Natron-Glas, wie es für Fensterscheiben üblich ist. Eine oder beide der Scheiben können aber auch aus anderen Glassorten gefertigt sein, beispielsweise Quarzglas, Borosilikatglas oder Aluminosilikatglas, oder aus starren klaren Kunststoffen, beispielsweise Polycarbonat oder Polymethylmethacrylat. Die Scheiben können klar sein oder auch getönt oder gefärbt. Die Dicken der Außenscheibe und der Innenscheibe betragen unabhängig voneinander bevorzugt von 0,5 mm bis 5 mm, besonders bevorzugt von 1 mm bis 3 mm.

Die Außenscheibe, die Innenscheibe und die thermoplastische Zwischenschicht können klar und farblos, aber auch getönt oder gefärbt sein. Die Gesamttransmission durch Verbundscheibe beträgt in einer bevorzugten Ausgestaltung größer 70%, insbesondere für den Fall, dass die Verbundscheibe eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Die Verbundscheibe ist bevorzugt in einer oder in mehreren Richtungen des Raumes gebogen, wie es insbesondere für Kraftfahrzeugscheiben üblich ist. Typische Krümmungsradien liegen dabei im Bereich von etwa 10 cm bis etwa 40 m. Die innenraumseitige Oberfläche der Innenscheibe ist dabei in der Regel konkav gekrümmt, die außenseitige Oberfläche der Außenscheibe konvex. Die Verbundscheibe kann aber auch plan sein, beispielsweise wenn sie als Scheibe für Busse, Züge oder Traktoren, für Gebäude oder Möbeln vorgesehen ist.

Die Erfindung umfasst außerdem ein Verfahren zur Herstellung einer erfindungsgemäßen Projektionsanordnung, mindestens umfassend:
(a) Verbinden einer Außenscheibe und einer Innenscheibe über eine thermoplastische Zwischenschicht zu einer eine Verbundscheibe,
   wobei die Verbundscheibe mit einem opaken Maskierungsbereich und einem transparenten Durchsichtsbereich versehen wird und
   wobei die Verbundscheibe in einem im Durchsichtsbereich angeordneten HUD-Bereich und in einem im Maskierungsbereich angeordneten Sekundäranzeigebereich mit jeweils mit einer Reflexionsschicht ausgestattet wird; und
(b) Richten mindestens einer bildgebenden Einheit auf den HUD-Bereich und den Sekundäranzeigebereich.

Erfindungsgemäß sind die Reflexionsschichten dabei geeignet, die Strahlung der mindestens einen bildgebenden Einheit zur Erzeugung eines Anzeigebildes zu reflektieren, wobei die Reflexionsschicht im HUD-Bereich einen höheren Reflexionsgrad gegenüber der Strahlung der mindestens einen bildgebenden Einheit aufweist als die Reflexionsschicht im Sekundäranzeigebereich.

Die vorstehenden Ausführungen und bevorzugten Ausgestaltungen im Zusammenhang mit der Projektionsanordnung gelten für das Verfahren gleichermaßen.

Das Ausstatten der Verbundscheibe mit den Reflexionsschichten kann auf unterschiedliche Art und Weise erfolgen. Sind die Reflexionsschichten Beschichtungen auf der Außen- oder Innenscheibe, so werden diese bevorzugt durch physikalische Gasphasenabscheidung (PVD) auf die jeweilige Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Grundsätzlich können die Beschichtungen aber auch beispielsweise mittels chemischer Gasphasenabscheidung (CVD), beispielsweise plasmagestützte Gasphasenabscheidung (PECVD), durch Aufdampfen oder durch Atomlagenabscheidung (*atomic layer deposition,* ALD) aufgebracht werden. Die Reflexionsschichten werden bevorzugt vor dem Verbinden der Scheiben zur Verbundscheibe (Lamination) auf eine Oberfläche aufgebracht, die dann der Zwischenschicht zugewandt wird (innenraumseitige Oberfläche der Außenscheibe oder außenseitige Oberfläche der Innenscheibe, bevorzugt letzteres). In diesem Fall kann die Zwischenschicht aus einer einzelnen Verbindungsfolie oder aus mehreren übereinandergestapelten Verbindungsfolie ausgebildet werden. Es wird also ein Schichtstapel erzeugt aus den folgenden Elementen in der angegebenen Reihenfolge: Außenscheibe - mindestens eine Verbindungsfolie - Innenscheibe. Dieser Schichtstapel wird dann zur Verbundscheibe laminiert.

In einer bevorzugten Ausgestaltung sind die Reflexionsschichten aber als Reflexionsfolien ausgebildet. Diese werden zwischen zwei thermoplastische Verbindungsschichten angeordnet und bilden mit diesen die Zwischenschicht aus. Die thermoplastischen Verbindungsschichten werden bevorzugt dadurch angeordnet, dass eine entsprechende thermoplastische Verbindungsfolie an der entsprechenden Stelle positioniert wird. Alternativ kann aber auch eine oder beide der angrenzenden Schichten mit einer dünnen polymeren Beschichtung versehen werden. Die Verbindungsschicht werden bevorzugt jeweils in Form mindestens einer thermoplastischen Verbindungsfolie (insbesondere PVB-Folie) bereitgestellt. Es wird also ein Schichtstapel erzeugt aus den folgenden Elementen in der angegebenen Reihenfolge: Außenscheibe - mindestens eine Verbindungsfolie - Reflexionsfolien - mindestens eine Verbindungsfolie - Innenscheibe. Dieser Schichtstapel wird dann zur Verbundscheibe laminiert. Die Reflexionsfolien können in der Regel zugekauft werden, beispielsweise als PET-Trägerfolie mit einer elektrisch leitfähigen Beschichtung oder als rein dielektrische Reflexionsfolie mit unterschiedlichen Einzelschichten, welche alternierend einen höheren und einen geringeren Brechungsindex aufweisen. Sie können hergestellt werden durch Abscheidung einer elektrisch leitfähigen Beschichtung auf eine PET-Trägerfolie, insbesondere mit den vorstehend genannten Dünnschicht-Beschichtungsverfahren, oder durch Koextrusion beziehungsweise Multiextrusion zweier Materialien mit unterschiedlichem Brechungsindex zu einer rein dielektrischen Reflexionsfolie.

Die Reflexionsfolie für den HUD-Bereich und die Reflexionsfolie für den Sekundäranzeigebereich können vor dem Anordnen im Schichtstapel bereits stabil miteinander verbunden werden, insbesondere über ihre Seitenkanten entlang einer Kontaktlinie. Diese Verbindung kann beispielsweise durch Verkleben oder Verschmelzen erfolgen. Dadurch können beide Reflexionsfolien wie eine einzelne Folie gehandhabt werden und gemeinsam im Schichtstapel positioniert werden.

Auch die Ausbildung des Maskierungsbereichs kann auf unterschiedliche Art und Weise erfolgen. Er kann dadurch ausgebildet werden, dass eine opake Emaille-Druckfarbe auf eine Oberfläche der Scheiben, insbesondere die innenraumseitige Oberfläche der Außenscheibe, aufgebracht wird, insbesondere mittels eines Siebdruckverfahrens. Die Emaille-Druckfarbe wird dann in die Scheibenoberfläche eingebrannt, wobei sie einen opaken Abdeckdruck bilden, der den Maskierungsbereich ausbildet.

In einer bevorzugten Ausgestaltung wird der Maskierungsbereich aber durch eine opake polymere Folie ausgebildet. In diesem Fall wird eine der Verbindungschichten nicht durch eine einzelne homogene Verbindungsfolie ausgebildet, sondern zusammengesetzt aus einem Abschnitt einer opaken Verbindungsfolie und einem Abschnitt einer transparenten Verbindungsfolie. Die Verbindungsschicht mit der opaken Verbindungsfolie wird zwischen der Reflexionsschicht und der Außenscheiben angeordnet. Werden Reflexionsfolien als Reflexionsschichten verwendet, so ist die die Verbindungsschicht mit der opaken Verbindungsfolie diejenige (oder eine derjenigen), welche zwischen den Reflexionsschichten und der Außenscheibe angeordnet wird beziehungsweise werden.

In einer vorteilhaften Ausführung werden zunächst eine transparente Verbindungsschicht und die Reflexionsfolien flächig übereinander angeordnet und dauerhaft stabil zu einer Mehrschichtfolie (genauer gesagt Zweischichtfolie, "Bilayer") verbunden, beispielsweise durch Kleben oder Lamination (insbesondere unter Temperatureinwirkung). Der Vorteil der Mehrschichtfolie liegt darin, dass sie wie eine einzelne Verbindungsfolie gehandhabt werden kann - die beiden Schichten werden in einem Schritt gemeinsam im Schichtstapel positioniert und müssen nicht einzeln und nacheinander kongruent im Schichtstapel angeordnet werden. Die transparente Verbindungsschicht ist insbesondere einstückig aus einer transparenten Verbindungsfolie ausgebildet, so dass der Mehrschichtstapel vergleichsweise einfach herzustellen ist.

Anschließend werden die Außenscheibe, die zusammengesetzte Verbindungsschicht mit der opaken Verbindungsfolie, die Zweischichtfolie und die Innenscheibe in der angegebenen Reihenfolge flächig übereinander zum Schichtstapel angeordnet, wobei die Verbindungsschicht der Mehrschichtfolie der Innenscheibe zugewandt wird. Grundsätzlich ist es aber möglich, dass weitere Verbindungsschichten zwischen Zweischichtfolie und Innenscheibe und/oder zwischen Zweischichtfolie und Außenscheibe eingelegt werden, insbesondere transparente Verbindungsschichten.

In einer besonders vorteilhaften Ausführung werden zunächst eine transparente Verbindungsschicht, die Reflexionsfolien und eine weitere transparente Verbindungsschicht in der angegebenen Reihenfolge flächig übereinander angeordnet und dauerhaft stabil zu einer Mehrschichtfolie (genauer gesagt Dreischichtfolie, "Trilayer") verbunden, beispielsweise durch Kleben oder Lamination (insbesondere unter Temperatureinwirkung). In der Mehrschichtfolie sind die Reflexionsfolien sicher eingelagert, und aufgrund der außenliegenden Verbindungsschichten weist sie adhäsive Eigenschaften gegenüber den Scheiben und anderen Verbindungsschichten auf. Der Vorteil der Mehrschichtfolie liegt darin, dass sie wie eine einzelne Verbindungsfolie gehandhabt werden kann - die drei Schichten werden in einem Schritt gemeinsam im Schichtstapel positioniert und müssen nicht einzeln und nacheinander kongruent im Schichtstapel angeordnet werden. Die transparenten Verbindungsschichten sind insbesondere einstückig aus jeweils einer transparenten Verbindungsfolie ausgebildet, so dass der Mehrschichtstapel vergleichsweise einfach herzustellen ist.

Anschließend werden die Außenscheibe, die zusammengesetzte Verbindungsschicht mit der opaken Verbindungsfolie, die Mehrschichtfolie und die Innenscheibe in der angegebenen Reihenfolge flächig übereinander zum Schichtstapel angeordnet. Die hergestellte Verbundscheibe besteht dann aus den folgenden Schichten in der angegebenen Reihenfolge: Außenscheibe - äußere Verbindungsschicht mit opakem Bereich - transparente weitere äußere Verbindungsschicht - Reflexionsfolien - transparente innere Verbindungsschicht - Innenscheibe. Grundsätzlich ist es aber möglich, dass weitere Verbindungsschichten zwischen Dreischichtfolie und Innenscheibe und/oder zwischen Dreischichtfolie und Außenscheibe eingelegt werden, insbesondere transparente Verbindungsschichten.

Die besagten Mehrschichtfolien (Zweischichtfolie, Dreischichtfolie) werden bevorzugt in großflächiger Form bereitgestellt, beispielsweise als Rollenware, mit Abmessungen die deutlich größer sind als die Fläche typischer Verbundscheiben. Daraus wird dann bei der Herstellung der Verbundscheibe ein passendes Stück ausgeschnitten, wie es auch bei einfachen Verbindungsfolien üblich ist.

Ist der Schichtstapel aus Außenscheibe, den Bestandteilen der Zwischenschicht und Innenscheibe erzeugt, samt Maskierungsbereich und Reflexionsschichten, wird er zur Verbundscheibe laminiert. Dies erfolgt insbesondere durch an sich bekannte Verfahren, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe über die Zwischenschicht erfolgt dabei üblicherweise unter Einwirkung von Hitze, Vakuum und/oder Druck.

Soll die Verbundscheibe gebogen sein, so werden die Außenscheibe und die Innenscheibe bevorzugt vor der Lamination und bevorzugt nach etwaigen Beschichtungsprozessen einem Biegeprozess unterzogen, um sie in eine zylindrisch oder sphärisch gebogene Form zu bringen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Bei diesen Temperaturen werden die Glasscheiben plastisch verformbar und können mit an sich bekannten Biegeverfahren, beispielsweise Schwerkraftbiegen, Pressbiegen, Saugbiegen oder Kombinationen davon, in die gewünschte Form gebracht.

Die Erfindung umfasst außerdem die Verwendung einer erfindungsgemäßen Projektionsanordnung in einem Fahrzeug (insbesondere Kraftfahrzeug), wobei die Verbundscheibe eine Fensterscheibe des Fahrzeugs ist, bevorzugt eine Windschutzscheibe. Die Projektionsanordnung kann aber auch in Gebäuden, Möbeln oder Einrichtungsgegenständen verwendet werden.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Verbundscheibe einer erfindungsgemäßen Projektionsanordnung,
- Fig. 2: einen Querschnitt durch eine erfindungsgemäße Projektionsanordnung mit der Verbundscheibe aus Figur 1,
- Fig. 3: einen Querschnitt durch die Verbundscheibe aus Figur 1,
- Fig. 4: einen Querschnitt durch eine weitere Ausgestaltung der Verbundscheibe einer erfindungsgemäßen Projektionsanordnung,
- Fig. 5: einen Querschnitt durch eine weitere Ausgestaltung der Verbundscheibe einer erfindungsgemäßen Projektionsanordnung.

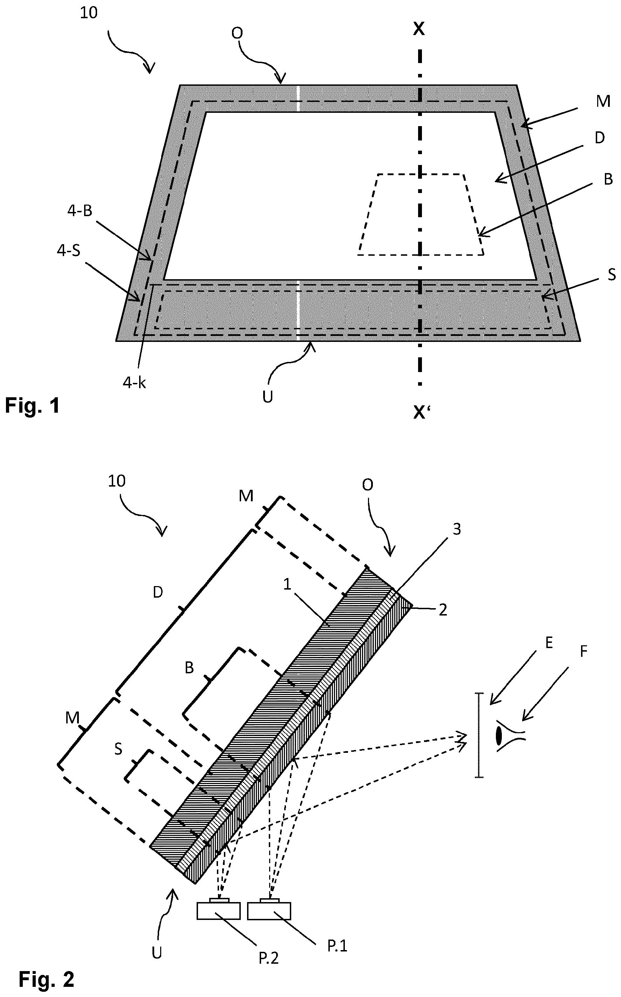

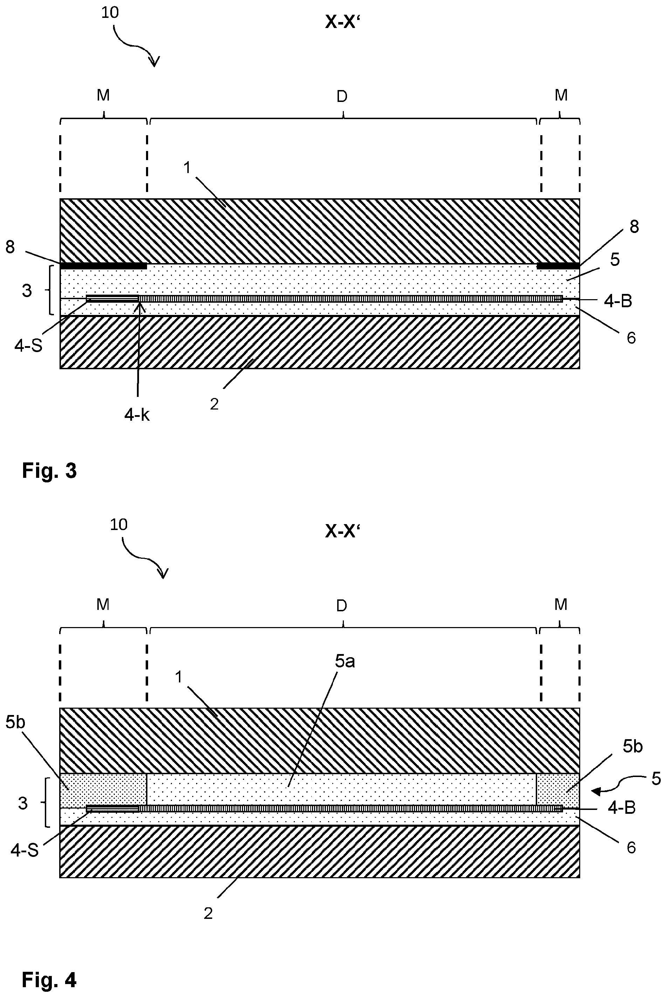

Figur 1, Figur 2 und Figur 3 zeigen je ein Detail einer erfindungsgemäßen Projektionsanordnung aus einer Verbundscheibe 10 und zwei Projektoren P.1, P.2. Figur 1 zeigt dabei eine Draufsicht auf die Verbundscheibe 10, Figur 2 einen Querschnitt durch die Projektionsanordnung entlang der in Figur 1 gekennzeichneten Schnittlinie X-X' und Figur 3 einen Querschnitt durch die Verbundscheibe 10 entlang derselben Schnittlinie mit einer größeren Anzahl von Details.

Die Verbundscheibe 10 ist die Windschutzscheibe eines Kraftfahrzeugs und weist einen opaken Maskierungsbereich M auf, der in einem umlaufendenden Randbereich angeordnet ist und einem transparenten Durchsichtsbereich D rahmenartig umgibt. Die Verbundscheibe 10 weist eine nach oben (in Richtung des Fahrzeugdachs) weisende Oberkante O und eine nach unten (in Richtung des Motorraums) weisende Unterkante U auf und zwei dazwischen verlaufende Seitenkanten. Solche Maskierungsbereiche M sind bei Fahrzeugscheiben üblich - sie dienen dem Schutz des Klebstoffs, der zum Verkleben der Verbundscheibe 10 mit der Fahrzeugkarosserie verwendet wird, vor UV-Strahlung. Außerdem können etwaige elektrische Anschlüsse oder die Seitenkante einer eingelagerten Funktionsfolie im Maskierungsbereich M versteckt werden.

Die Projektionsanordnung umfasst außerdem zwei Projektoren P.1, P.2. Der erste Projektor P.1 ist auf einen Bereich der Verbundscheibe 10 im Durchsichtsbereich D gerichtet. In diesem Bereich, der im Sinne der Erfindung als HUD-Bereich B bezeichnet wird, können durch den Projektor P.1 Bilder erzeugt werden, welche von einem Betrachter F (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden. Der zweite Projektor P.2 ist auf einen Bereich der Verbundscheibe 10 im Maskierungsbereich M gerichtet. In diesem Bereich, der im Sinne der Erfindung als Sekundäranzeigebereich S bezeichnet wird, können durch den Projektor P.2 ebenfalls Bilder erzeugt werden, welche vom Betrachter F wahrgenommen werden. Im HUD-Bereich B wird ein Head-Up-Display (HUD) realisiert, durch das dem Betrachter F Informationen in sein Sichtfeld eingeblendet werden können, ohne dass er seinen Blick von der Fahrbahn wenden muss. Im Sekundäranzeigebereich S, welchen in einem an die Unterkante U grenzenden Abschnitt der Verbundscheibe 10 angeordnet ist, können beispielsweise Statusanzeigen angezeigt werden, die herkömmlich am Armaturenbrett angezeigt werden (beispielsweise die Fahrgeschwindigkeit, die Darstellung des Navigationssystems, Geschwindigkeitsbegrenzungen und sonstige Informationen über die derzeit befahrene Strecke, Temperatur- oder Uhrzeitangaben), oder das Bild oder die Bilder einer oder mehrerer rückwärts gerichteter Kameras, welche die klassischen Rückspiegel und/oder Außenspiegel ergänzen oder ersetzen.

Die Verbundscheibe 10 ist aufgebaut aus einer Außenscheibe 1 und einer Innenscheibe 2, die über eine thermoplastische Zwischenschicht 3 miteinander verbunden sind. Die Außenscheibe 1 ist in Einbaulage der äußeren Umgebung zugewandt, die Innenscheibe 2 dem Fahrzeuginnenraum. Die Verbundscheibe 10 ist der Einfachheit halber plan dargestellt, obwohl Fahrzeugscheiben üblicherweise gebogen sind, was auch im Rahmen der vorliegenden Erfindung bevorzugt ist. Die Außenscheibe 1 und die Innenscheibe 2 bestehen aus Kalk-Natron-Glas. Die Außenscheibe 1 weist beispielsweise eine Dicke von 2,1 mm auf, die Innenscheibe 2 eine Dicke von 1,6 mm.

Der Maskierungsbereich M ist durch einen schwarzen Abdeckdruck 8 ausgebildet, welcher auf der zur Zwischenschicht 3 hingewandten, innenraumseitigen Oberfläche der Außenscheibe 1 aufbracht ist. Ein solcher Abdeckdruck 8 ist im Fahrzeugbereich allgemein üblich: eine Emaille-Farbe wird mittels Siebdruck auf die Scheibenoberfläche aufgedruckt. Sie enthält ein Schwarzpigment sowie Glasfritten, welche in die Scheibenoberfläche eingebrannt werden.

Die Zwischenschicht 3 weist einen mehrlagigen Aufbau auf. Sie weist eine äußere Verbindungsschicht 5 auf, die der Außenscheibe 1 zugewandt ist, und eine innere Verbindungsschicht 6, die der Innenscheibe 2 zugewandt ist. Die Verbindungsschichten 5, 6 sind transparent und aus handelsüblichen PVB-Folien ausgebildet, die zudem Weichmacher enthalten. Die äußere Verbindungsschicht 5 weist eine Dicke von 0,76 mm auf, die innere Verbindungsschicht 6 eine Dicke von 0,38 mm.

Zwischen den Verbindungsschichten 5, 6 sind zwei Reflexionsschichten 4-B, 4-S angeordnet, welche als Reflexionsfolien ausgebildet sind. Die Reflexionsschichten 4-B, 4-S sind also über die äußere Verbindungsschicht 5 mit der Außenscheibe 1 verbunden und über die innere Verbindungsschicht 6 mit der Innenscheibe 2. Die Reflexionsschicht 4-B erstreckt sich über den gesamten Durchsichtsbereich D, ihre Seitenkanten sind im Maskierungsbereich M angeordnet. Im HUD-Bereich B ist die Reflexionsschicht 4-B vorhanden. Die Reflexionsschicht 4-S ist im an die Unterkante U angrenzenden Abschnitt des Maskierungsbereichs M angeordnet. Im Sekundäranzeigebereich S ist die Reflexionsschicht 4-S vorhanden. Die Reflexionsschichten 4-B, 4-S sind in derselben Ebene der Verbundscheibe 10 angeordnet, nämlich zwischen den Verbindungsschichten 5, 6. Sie sind benachbart zueinander angeordnet, wobei Abschnitte ihrer Seitenkanten direkt in Kontakt miteinander stehen entlang einer Kontaktlinie 4-k. Die Kontaktlinie 4-k ist im an die Unterkante U angrenzenden Abschnitt des Maskierungsbereichs M angeordnet und weist einen Abstand von der dem Durchsichtsbereich D zugewandten Kante des Maskierungsbereichs M von beispielsweise 7 mm auf.

Die Projektoren P.1, P.2 sind innenraumseitig der Verbundscheibe 10 angeordnet. Die Innenscheibe 2 der Verbundscheibe 10 ist also den Projektoren P.1, P.2 zugewandt. Der Projektor P.1 bestrahlt den HUD-Bereich B, der Projektor P.2 bestrahlt den Sekundäranzeigebereich S, jeweils zur Erzeugung eines Anzeigebildes. Der Strahlung der Projektoren P.1, P.2 ist p-polarisiert, insbesondere im Wesentlichen rein p-polarisiert. Da die Projektoren P.1, P.2 die Verbundscheibe 10 mit einem Einfallswinkel von etwa 65° bestrahlen, der nahe dem Brewster-Winkel liegt, wird die Strahlung der Projektoren P.1, P.2 nur unwesentlich an den externen, von der Zwischenschicht 3 abgewandten Oberflächen der Verbundscheibe 10 reflektiert. Die doppelte Reflexion an diesen externen Oberflächen führt bei s-polarisierten HUDs zu einem Geisterbild, welches in der Regel dadurch mit dem Hauptbild zur Deckung gebracht wird, dass die Oberflächen in einem Keilwinkel zueinander angeordnet werden (durch Verwendung einer keilförmigen Zwischenschicht und/oder mindestens einer keilförmigen Scheibe). Darauf kann bei Projektionsanordnungen mit p-polarisierter Strahlung verzichtet werden. Dafür muss die Verbundscheibe 10 mit einer zusätzlichen reflektierenden Grenzfläche ausgestattet werden, um die p-polarisierte Strahlung zu reflektieren. Diese Funktion erfüllt im vorliegenden Fall die Reflexionsschicht 4-B für den HUD-Bereich B und die Reflexionsschicht 4-S für den Sekundäranzeigebereich S.

Die Reflexionsschichten 4-B, 4-S sind rein dielektrische Reflexionsfolien, welche jeweils aus einer Abfolge polymerer dielektrischer Einzelschichten aufgebaut ist, wobei die Einzelschichten alternierend einen höheren und einen niedrigeren Brechungsindex aufweisen. Zumindest eine der beiden Schichtarten besteht aus PET. Durch Interferenz weisen die Reflexionsfolien reflektierende Eigenschaften auf, insbesondere gegenüber der Strahlung der Projektoren P.1, P.2.

Dadurch, dass erfindungsgemäß für den HUD-Bereich B und den Sekundäranzeigebereich S verschiedene Reflexionsschichten 4-B, 4-S verwendet werden, können deren Eigenschaften gezielt auf die jeweiligen Erfordernisse eingestellt werden. Dies erfolgt im vorliegenden Fall insbesondere durch Brechungsindex und/oder Dicke der Einzelschichten, wodurch die optische Interferenz beeinflusst werden kann. Im HUD-Bereich B wird eine Reflexionsschicht 4-B mit einem geringeren Reflexionsgrad gegenüber der Projektorstrahlung verwendet als im Sekundäranzeigebereich S. Dadurch wird sichergestellt, dass die Lichttransmission des Durchsichtsbereichs D nicht in kritischem Maße herabgesetzt wird. Die Reflexionsschicht 4-S im Sekundäranzeigebereich S weist einen höheren Reflexionsgrad auf, was problemlos möglich ist, da die Lichttransmission im Maskierungsbereich M keine Rolle spielt. Dadurch kann die Intensität des Sekundäranzeigebildes deutlich gesteigert werden. Das ist der große Vorteil der vorliegenden Erfindung.

Auch wenn die Erfindung hier beispielhaft mit Projektoren P.1, P.2 als bildgebende Einheiten dargestellt wird, können alternativ beispielsweise elektronische Anzeigen (Bildschirme, "Displays") als bildgebende Einheiten verwendet werden. Dies kann insbesondere im Falle der zweiten bildgebende Einheit P.2 für den Sekundäranzeigebereich S vorteilhaft sein.

Figur 4 zeigt einen Querschnitt durch eine weitere Verbundscheibe 10, die für eine erfindungsgemäße Projektionsanordnung verwendet werden kann. Die Außenscheibe 1, die Innenscheibe 2, die innere Verbindungsschicht 6 und die Reflexionsschichten 4-B, 4-S sind genauso ausgestaltet wie im Beispiel der Figuren 1 bis 3. Die Außenscheibe 1 ist aber nicht mit einem Abdeckdruck 8 versehen. Der Maskierungsbereich M ist stattdessen durch eine opake Folie 5b ausgebildet. Die äußere Verbindungsschicht 5 ist zusammengesetzt aus dieser opaken Folie 5b im Maskierungsbereich M und einer transparenten Folie 5a im Durchsichtsbereich D. Beide Folien 5a, 5b sind 0,76 mm dicke PVB-Folien, wobei die Opazität der Folie 5b durch den Zusatz von Pigmenten realisiert ist.

Die PET-basierten Reflexionsschichten 4-B, 4-S können einen sogenannten Orangenhauteffekt hervorrufen, der besonders in Reflexion sichtbar ist und zu optischen Verzerrungen führt. Die Erfinder haben festgestellt, dass der Orangenhauteffekt vor dem Hintergrund der opaken Folie 5b wesentlich weniger auffällig ist als vor dem Hintergrund des Abdeckdrucks 8. Optische Verzerrungen fallen weniger störend auf, was mit bloßem Auge zu erkennen ist und für einen qualitativen Vergleich herangezogen werden kann (beispielsweise mit einer sich an der Verbundscheibe spiegelnden Lampe).

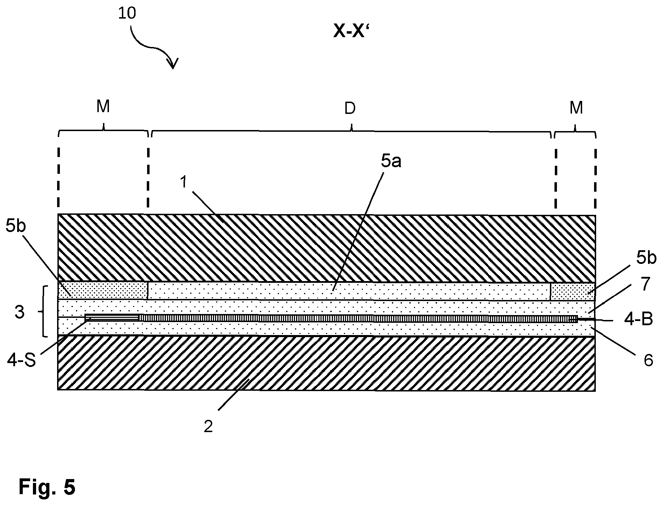

Figur 5 zeigt einen Querschnitt durch eine weitere Verbundscheibe 10, die für eine erfindungsgemäße Projektionsanordnung verwendet werden kann. Die Außenscheibe 1, die Innenscheibe 2, die innere Verbindungsschicht 6 und die Reflexionsschichten 4-B, 4-S sind genauso ausgestaltet wie in den Beispielen der Figuren 1 bis 3 sowie Figur 4. Wie in Figur 4 ist der Maskierungsbereich durch eine opake Folie 5b ausgebildet und die Außenscheibe 1 ist nicht mit einem Abdeckdruck 8 versehen. Neben der äußeren Verbindungsschicht 5, welche aus der opaken Folie 5b und einer transparenten Folie 5a zusammengesetzt ist, ist aber eine weitere äußere Verbindungsschicht 7 vorhanden, die aus einer transparenten PVB-Folie ausgebildet ist. Die Reflexionsschichten 4-B, 4-S sind zwischen der transparenten inneren Verbindungsschicht 6 und der transparenten weiteren äußeren Verbindungsschicht 7 angeordnet, die äußere Verbindungsschicht 5 mit der opaken Folie 5b zwischen der weiteren äußeren Verbindungsschicht 7 und der Außenscheibe 1. Die beiden äußeren Verbindungsschichten 5, 7 weisen jeweils eine Dicke von 0,38 mm auf.

Dieser Aufbau hat den Vorteil, dass die weitere äußere Verbindungsschicht 7, die Reflexionsschichten 4-B, 4-S und die innere Verbindungsschicht 6 vor der Herstellung der Verbundscheibe bereits zu einer prälaminierten Mehrschichtfolie verbunden werden können, die dann einfach zu handhaben ist als wenn jede einzelne Schicht im Schichtstapel zwischen den Scheiben 1, 2 angeordnet werden muss. Eine Mehrschichtfolie unter Beteiligung der mehrstückig ausgebildeten äußeren Verbindungsschicht 5 wäre hingegen komplizierter in der Herstellung.

### Bezugszeichenliste:

- (10): Verbundscheibe

- (1): Außenscheibe
- (2): Innenscheibe
- (3): thermoplastische Zwischenschicht
- (4-B): Reflexionsschicht im HUD-Bereich B
- (4-S): Reflexionsschicht im Sekundäranzeigebereich S
- (4-k): Grenzlinie der Reflexionsschichten 4-B, 4-S
- (5): äußere Verbindungsschicht der Zwischenschicht 3
- (5a): transparente Folie der äußeren Verbindungsschicht 5
- (5b): opake Folie der äußeren Verbindungsschicht 5
- (6): innere Verbindungsschicht
- (7): weitere äußere Verbindungsschicht
- (8): Abdeckdruck

- (P.1): erste bildgebende Einheit / erster Projektor
- (P.2): zweite bildgebende Einheit / zweiter Projektor
- (E): Eyebox
- (F): Betrachter / Fahrzeugfahrer

- (M): Maskierungsbereich der Verbundscheibe 10
- (D): Durchsichtsbereich der Verbundscheibe 10
- (B): HUD-Bereich der Verbundscheibe 10
- (S): Sekundäranzeigebereich der Verbundscheibe 10
- (O): Oberkante der Verbundscheibe 10
- (U): Unterkante der Verbundscheibe 10

## Patentansprüche

1. Projektionsanordnung, mindestens umfassend
- eine Verbundscheibe (10), umfassend eine Außenscheibe (1) und eine Innenscheibe (2), die über eine thermoplastische Zwischenschicht (3) miteinander verbunden sind, mit einem opaken Maskierungsbereich (M) und einem transparenten Durchsichtsbereich (D); und
- mindestens eine bildgebende Einheit (P.1, P.2), die auf einen im Durchsichtsbereich (D) angeordneten HUD-Bereich (B) und auf einen im Maskierungsbereich (M) angeordneten Sekundäranzeigebereich (S) gerichtet ist;
wobei
- die Verbundscheibe (10) im HUD-Bereich (B) und im Sekundäranzeigebereich (S) jeweils mit einer Reflexionsschicht (4-B, 4-S) ausgestattet ist, welche geeignet sind, die Strahlung der mindestens einen bildgebenden Einheit (P.1, P.2) zur Erzeugung eines Anzeigebildes zu reflektieren; und
- die Reflexionsschicht (4-S) im Sekundäranzeigebereich (S) einen höheren Reflexionsgrad gegenüber der Strahlung der mindestens einen bildgebenden Einheit (P.1, P.2) aufweist als die Reflexionsschicht (4-B) im HUD-Bereich (B).

2. Projektionsanordnung nach Anspruch 1, die eine erste bildgebende Einheit (P.1) aufweist, die auf den HUD-Bereich (B) gerichtet ist, und eine zweite bildgebende Einheit (P.2), die auf den Sekundäranzeigebereich (S) gerichtet ist.

3. Projektionsanordnung nach Anspruch 1 oder 2, wobei die Differenz zwischen dem Reflexionsgrad der Reflexionsschicht (4-S) im Sekundäranzeigebereich (S) gegenüber der Strahlung der mindestens einen bildgebenden Einheit (P.1, P.2) und dem Reflexionsgrad der Reflexionsschicht (4-B) im HUD-Bereich (B) gegenüber der Strahlung der mindestens einen bildgebenden Einheit (P.1, P.2) mindestens 10% beträgt, bevorzugt von 30% bis 60%.

4. Projektionsanordnung nach einem der Ansprüche 1 bis 3, wobei die Reflexionsschichten (4-B, 4-S) jeweils als Reflexionsfolie mit mindestens einer Schicht auf Basis von Polyethylenterephthalat (PET) ausgebildet sind, welche in der Zwischenschicht (3) eingelagert sind.

5. Projektionsanordnung nach Anspruch 4, wobei die Reflexionsfolien rein dielektrische polymere Folien sind, welche alternierende Einzelschichten mit unterschiedlichem Brechungsindex enthalten.

6. Projektionsanordnung nach Anspruch 4 oder 5, wobei die Reflexionsfolien derart angeordnet sind, dass ihre Seitenkanten entlang einer Kontaktlinie (4-k) direkt aneinandergrenzen, und wobei die Kontaktlinie (4-k) im Maskierungsbereich (M) angeordnet ist.

7. Projektionsanordnung nach Anspruch 6, wobei der Abstand der Kontaktlinie (4-k) von der dem Durchsichtsbereich (D) zugewandten Kante des Maskierungsbereichs mindestens 1 mm beträgt, bevorzugt von 3 mm bis 15 mm.

8. Projektionsanordnung nach einem der Ansprüche 1 bis 7, wobei der Maskierungsbereich (M) zumindest im Sekundäranzeigebereich (S) durch eine opake polymere Folie (5b) ausgebildet ist, welche Teil der Zwischenschicht (3) ist und welche zwischen den Reflexionsschichten (4-B, 4-S) und der Außenscheibe (1) angeordnet ist.

9. Projektionsanordnung nach einem der Ansprüche 1 bis 8, wobei der Maskierungsbereich (M) in einem umlaufenden Randbereich der Verbundscheibe (10) angeordnet ist und den Durchsichtsbereich (D) umgibt.

10. Projektionsanordnung nach Anspruch 9, wobei
- die Verbundscheibe (10) eine Oberkante (O), eine Unterkante (U) und zwei dazwischen verlaufende Seitenkanten aufweist, und
- der Sekundäranzeigebereich (S) im an die Unterkante (U) angrenzenden Bereich des Maskierungsbereichs (M) angeordnet ist.

11. Projektionsanordnung nach einem der Ansprüche 1 bis 10, wobei die mindestens eine bildgebende Einheit (P.1, P.2) p-polarisierte Strahlung aussendet.

12. Projektionsanordnung nach einem der Ansprüche 1 bis 11, wobei die Zwischenschicht (3), mit Ausnahme der etwaigen Reflexionsfolien, auf Basis von Polyvinylbutyral (PVB), Ethylen-Vinylacetat (EVA) oder Polyurethan (PU) ausgebildet ist.

13. Projektionsanordnung nach einem der Ansprüche 1 bis 12, wobei die Außenscheibe (1) und die Innenscheibe (2) aus Kalk-Natron-Glas ausgebildet sind.

14. Verfahren zur Herstellung einer Projektionsanordnung, mindestens umfassend
(a)Verbinden einer Außenscheibe (1) und einer Innenscheibe (2) über eine thermoplastische Zwischenschicht (3) zu einer Verbundscheibe (10),
wobei die Verbundscheibe (10) mit einem opaken Maskierungsbereich (M) und einem transparenten Durchsichtsbereich (D) versehen wird und
wobei die Verbundscheibe (10) in einem im Durchsichtsbereich (D) angeordneten HUD-Bereich (B) und in einem im Maskierungsbereich (M) angeordneten Sekundäranzeigebereich (S) mit jeweils mit einer Reflexionsschicht (4-B, 4-S) ausgestattet wird; und
(b) Richten mindestens einer bildgebenden Einheit (P.1, P.2) auf den HUD-Bereich (B) und den Sekundäranzeigebereich (S);
wobei die Reflexionsschichten (4-B, 4-S) geeignet sind, die Strahlung der mindestens einen bildgebenden Einheit (P.1, P.2) zur Erzeugung eines Anzeigebildes zu reflektieren und
wobei die Reflexionsschicht (4-B) im HUD-Bereich (B) einen höheren Reflexionsgrad gegenüber der Strahlung der mindestens einen bildgebenden Einheit (P.1, P.2) aufweist als die Reflexionsschicht (4-S) im Sekundäranzeigebereich (S).

15. Verwendung einer Projektionsanordnung nach einem der Ansprüche 1 bis 13 in einem Fahrzeug, wobei die Verbundscheibe (10) eine Fensterscheibe des Fahrzeugs ist, bevorzugt eine Windschutzscheibe.

## Claims

1. Projection arrangement comprising at least
- a composite pane (10), comprising an outer pane (1) and an inner pane (2), which are connected to one another via a thermoplastic intermediate layer (3), with an opaque masking region (M) and a transparent see-through region (D); and
- at least one imaging unit (P.1, P.2), which is directed at an HUD region (B) arranged in the see-through region (D) and at a secondary display region (S) arranged in the masking region (M);
wherein
- the composite pane (10) is equipped in the HUD region (B) and in the secondary display region (S) in each case with a reflection layer (4-B, 4-S), which are suitable for reflecting the radiation of the at least one imaging unit (P.1, P.2) to generate a display image; and
- the reflection layer (4-S) in the secondary display region (S) has a higher reflectance with respect to the radiation of the at least one imaging unit (P.1, P.2) than the reflection layer (4-B) in the HUD region (B).

2. Projection arrangement according to claim 1, having a first imaging unit (P.1) directed at the HUD region (B) and a second imaging unit (P.2) directed at the secondary display region (S).

3. Projection arrangement according to claim 1 or 2, wherein the difference between the reflectance of the reflection layer (4-S) in the secondary display region (S) with respect to the radiation of the at least one imaging unit (P.1, P.2) and the reflectance of the reflection layer (4-B) in the HUD region (B) with respect to the radiation of the at least one imaging unit (P.1, P.2) is at least 10%, preferably from 30% to 60%.

4. Projection arrangement according to one of claims 1 to 3, wherein the reflection layers (4-B, 4-S) are in each case formed as a reflection film with at least one layer based upon polyethylene terephthalate (PET), which are embedded in the intermediate layer (3).

5. Projection arrangement according to claim 4, wherein the reflection films are purely dielectric polymer films, which contain alternating individual layers with different refractive indices.

6. Projection arrangement according to claim 4 or 5, wherein the reflection films are arranged such that their side edges are directly adjacent to one another along a contact line (4-k), and wherein the contact line (4-k) is arranged in the masking region (M).

7. Projection arrangement according to claim 6, wherein the distance of the contact line (4-k) from the edge of the masking region facing the see-through region (D) is at least 1 mm, preferably from 3 mm to 15 mm.

8. Projection arrangement according to one of claims 1 to 7, wherein the masking region (M) is formed at least in the secondary display region (S) by an opaque polymer film (5b) that is part of the intermediate layer (3) and that is arranged between the reflection layers (4-B, 4-S) and the outer pane (1).

9. Projection arrangement according to one of claims 1 to 8, wherein the masking region (M) is arranged in a circumferential edge region of the composite pane (10) and surrounds the see-through region (D).

10. Projection arrangement according to claim 9, wherein
- the composite pane (10) has an upper edge (O), a lower edge (U), and two side edges extending between them, and
- the secondary display region (S) is arranged in the region, adjoining the lower edge (U), of the masking region (M).

11. Projection arrangement according to one of claims 1 to 10, wherein the at least one imaging unit (P.1, P.2) emits p-polarised radiation.

12. Projection arrangement according to one of claims 1 to 11, wherein the intermediate layer (3), with the exception of the potential reflection films, is formed on the basis of polyvinyl butyral (PVB), ethylene-vinyl acetate (EVA), or polyurethane (PU).

13. Projection arrangement according to one of claims 1 to 12, wherein the outer pane (1) and the inner pane (2) are formed from soda-lime glass.

14. Method for producing a projection arrangement, comprising at least
(a) connecting an outer pane (1) and an inner pane (2) via a thermoplastic intermediate layer (3) to form a composite pane (10),
wherein the composite pane (10) is provided with an opaque masking region (M) and a transparent see-through region (D), and
wherein the composite pane (10) is equipped in each case with a reflection layer (4-B, 4-S) in an HUD region (B), arranged in the see-through region (D), and in a secondary display region (S), arranged in the masking region (M); and
(b) directing at least one imaging unit (P.1, P.2) at the HUD region (B) and the secondary display region (S);
wherein the reflection layers (4-B, 4-S) are suitable for reflecting the radiation of the at least one imaging unit (P.1, P.2) to generate a display image, and
wherein the reflection layer (4-B) in the HUD region (B) has a higher reflectance with respect to the radiation of the at least one imaging unit (P.1, P.2) than the reflection layer (4-S) in the secondary display region (S).

15. Use of a projection arrangement according to one of claims 1 to 13 in a vehicle, wherein the composite pane (10) is a window pane of the vehicle - preferably a windscreen.

## Revendications

1. Agencement de projection, comprenant au moins
- un vitrage feuilleté (10), comprenant une vitre externe (1) et une vitre interne (2) qui sont reliées entre elles par l'intermédiaire d'une couche intermédiaire (3) thermoplastique, comportant une zone de masquage (M) opaque et une zone transparente (D) transparente ; et
- au moins une unité d'imagerie (P.1, P.2) qui est dirigée vers une zone HUD (B) disposée dans la zone transparente (D) et vers une zone d'affichage secondaire (S) disposée dans la zone de masquage (M) ;
dans lequel
- le vitrage feuilleté (10) est équipé, dans la zone HUD (B) et dans la zone d'affichage secondaire (S), respectivement d'une couche de réflexion (4-B, 4-S) qui est adaptée pour réfléchir le rayonnement de l'au moins une unité d'imagerie (P.1, P.2) pour la génération d'une image d'affichage ; et
- la couche de réflexion (4-S) dans la zone d'affichage secondaire (S) présente un degré de réflexion plus élevé par rapport au rayonnement de l'au moins une unité d'imagerie (P.1, P.2) que celui de la couche de réflexion (4-B) dans la zone HUD (B).

2. Agencement de projection selon la revendication 1, lequel présente une première unité d'imagerie (P.1) dirigée vers la zone HUD (B) et une seconde unité d'imagerie (P.2) dirigée vers la zone d'affichage secondaire (S).

3. Agencement de projection selon la revendication 1 ou 2, dans lequel la différence entre le degré de réflexion de la couche de réflexion (4-S) dans la zone d'affichage secondaire (S) par rapport au rayonnement de l'au moins une unité d'imagerie (P.1, P.2) et le degré de réflexion de la couche de réflexion (4-B) dans la zone HUD (B) par rapport au rayonnement de l'au moins une unité d'imagerie (P.1, P.2) est d'au moins 10 %, de préférence va de 30 % à 60 %.

4. Agencement de projection selon l'une des revendications 1 à 3, dans lequel les couches de réflexion (4-B, 4-S) sont respectivement réalisées sous la forme d'un film de réflexion comportant au moins une couche à base de polyéthylène téréphtalate (PET) qui sont incorporés dans la couche intermédiaire (3).

5. Agencement de projection selon la revendication 4, dans lequel les films de réflexion sont des films polymères purement diélectriques qui contiennent des couches individuelles alternées comportant des indices de réfraction différents.

6. Agencement de projection selon la revendication 4 ou 5, dans lequel les films de réflexion sont disposés de telle sorte que leurs bords latéraux sont directement adjacents les uns aux autres le long d'une ligne de contact (4-k), et dans lequel la ligne de contact (4-k) est disposée dans la zone de masquage (M).

7. Agencement de projection selon la revendication 6, dans lequel la distance entre la ligne de contact (4-k) et le bord de la zone de masquage tourné vers la zone transparente (D) est d'au moins 1 mm, de préférence va de 3 mm à 15 mm.

8. Agencement de projection selon l'une des revendications 1 à 7, dans lequel la zone de masquage (M) est formée, au moins dans la zone d'affichage secondaire (S), par un film polymère opaque (5b) qui fait partie de la couche intermédiaire (3) et qui est disposé entre les couches de réflexion (4-B, 4-S) et la vitre externe (1).

9. Agencement de projection selon l'une des revendications 1 à 8, dans lequel la zone de masquage (M) est disposée dans une zone marginale périphérique du vitrage feuilleté (10) et entoure la zone transparente (D).

10. Agencement de projection selon la revendication 9, dans lequel
- le vitrage feuilleté (10) présente un bord supérieur (O), un bord inférieur (U) et deux bords latéraux s'étendant entre eux, et
- la zone d'affichage secondaire (S) est disposée dans la zone de la zone de masquage (M) adjacente au bord inférieur (U).

11. Agencement de projection selon l'une des revendications 1 à 10, dans lequel l'au moins une unité d'imagerie (P.1, P.2) émet un rayonnement polarisé p.

12. Agencement de projection selon l'une des revendications 1 à 11, dans lequel la couche intermédiaire (3), à l'exception des éventuels films de réflexion, est réalisée à base de polybutyral de vinyle (PVB), d'éthylène-acétate de vinyle (EVA) ou de polyuréthane (PU).

13. Agencement de projection selon l'une des revendications 1 à 12, dans lequel la vitre externe (1) et la vitre interne (2) sont réalisées en verre sodocalcique.

14. Procédé pour la fabrication d'un agencement de projection, comprenant au moins
(a) la liaison d'une vitre externe (1) et d'une vitre interne (2) par l'intermédiaire d'une couche intermédiaire (3) thermoplastique pour former un vitrage feuilleté (10),
dans lequel le vitrage feuilleté (10) est pourvu d'une zone de masquage (M) opaque et d'une zone transparente (D) transparente et
dans lequel le vitrage feuilleté (10) est équipé de respectivement une couche de réflexion (4-B, 4-S) dans une zone HUD (B) disposée dans la zone transparente (D) et dans une zone d'affichage secondaire (S) disposée dans la zone de masquage (M) ; et
(b) l'orientation d'au moins une unité d'imagerie (P.1, P.2) vers la zone HUD (B) et la zone d'affichage secondaire (S) ;
dans lequel les couches de réflexion (4-B, 4-S) sont adaptées pour réfléchir le rayonnement de l'au moins une unité d'imagerie (P.1, P.2) pour la génération d'une image d'affichage et
dans lequel la couche de réflexion (4-B) dans la zone HUD (B) présente un degré de réflexion plus élevé par rapport au rayonnement de l'au moins une unité d'imagerie (P.1, P.2) que celui de la couche de réflexion (4-S) dans la zone d'affichage secondaire (S).

15. Utilisation d'un agencement de projection selon l'une des revendications 1 à 13 dans un véhicule, dans laquelle le vitrage feuilleté (10) est une vitre de véhicule du véhicule, de préférence un pare-brise.
